# DEMANDE DE BREVET EUROPEEN

(11) **EP 2 119 485 A1**
(43) Date de publication de la demande: **18.11.2009**
(21) Numéro de dépôt: 09159458.0
(22) Date de dépôt: 05.05.2009
(51) Int. Cl.: B01D 27/06, B01D 27/08, B01D 29/96, B01D 35/30

(54) **dispositif de filtration de fluide.**

(30) Priorité: 07.05.2008 FR 0853037
(71) Demandeur: Soletanche Freyssinet, 78140 Vélizy Villacoublay (FR)
(72) Inventeur: Bouzols, Frédéric, 26702, Pierrelatte Cedex (FR)
(74) Mandataire: Cabinet Plasseraud

(57) **Abrégé**

Dispositif de filtration de fluide comprenant :
- une tête (10) munie d'ouvertures (13) pour l'introduction et l'extraction de fluide, comprenant une partie de liaison (12) pour recevoir par vissage une cuve (20) et comprenant également une tige support (14) munie d'une extrémité filetée (15) pour recevoir une cartouche de filtration (30),
- un bouchon (40, 400) pour retenir ladite cartouche de filtration (30), où ledit bouchon (40, 400) comprend une partie filetée (45) susceptible d'être vissée à l'extrémité filetée (15) de la tige support (14),
- une cuve (20) s'étendant longitudinalement sensiblement selon l'axe de la tige support (14) quand le dispositif est assemblé où ladite cuve (20) comprend une partie de raccord fileté (22) destinée à être vissée avec la partie de liaison (12) de la tête (10),
- des moyens (50, 60 ; 500, 600) d'engagement en rotation du bouchon (40,400) solidaires en rotation de la cuve (20).

## Description

La présente invention concerne un dispositif de filtration de fluide. De tels dispositifs sont mis en oeuvre dans de très nombreuses installations et comprennent en général une tête munie d'ouvertures pour l'introduction et l'extraction d'un fluide à purifier, une cuve dans laquelle est disposée une cartouche de filtration à travers laquelle le fluide peut passer. En général une cartouche de filtration est un cylindre creux dont la paroi comprend un milieu filtrant, avec en général des fibres, notamment sous la forme d'un papier. Un tel papier peut être plissé pour augmenter les surfaces d'échange. La cartouche comprend en général à chacune de ses extrémités, des joints toriques pour assurer un assemblage étanche avec d'une part la tête, d'autre part un bouchon.

De manière usuelle la cartouche de filtration est maintenue en place grâce à une tige support faisant partie de la tête et à un bouchon vissé à l'extrémité de la tige support. Le fluide pénètre dans le dispositif en général par une ouverture de la tête qui communique avec l'espace compris entre la partie intérieure de la cuve et la cartouche de filtration, traverse ladite cartouche de filtration, et ressort purifié par une ouverture de la tête après être passé à l'intérieur de la cartouche de filtration.

De tels dispositifs de filtration de fluide sont notamment utilisés dans des installations de l'industrie, notamment de l'industrie chimique ou nucléaire, où le choix de la cartouche de filtration s'effectue en fonction du type de purification recherché, tel que par exemple rétention de particules dont on peut choisir la taille, rétention de molécules sélectionnées, notamment par échange d'ions ou adsorption.

On peut citer à titre d'exemple les dispositifs de filtration commercialisés par la société PALL, notamment les dispositifs référencés sous les noms de série commerciale PCY, CCL, PCL, PC. Cette société commercialise également des cartouches de filtration, par exemple celles référencées HDC susceptibles d'être installées dans les dispositifs mentionnés ci-dessus.

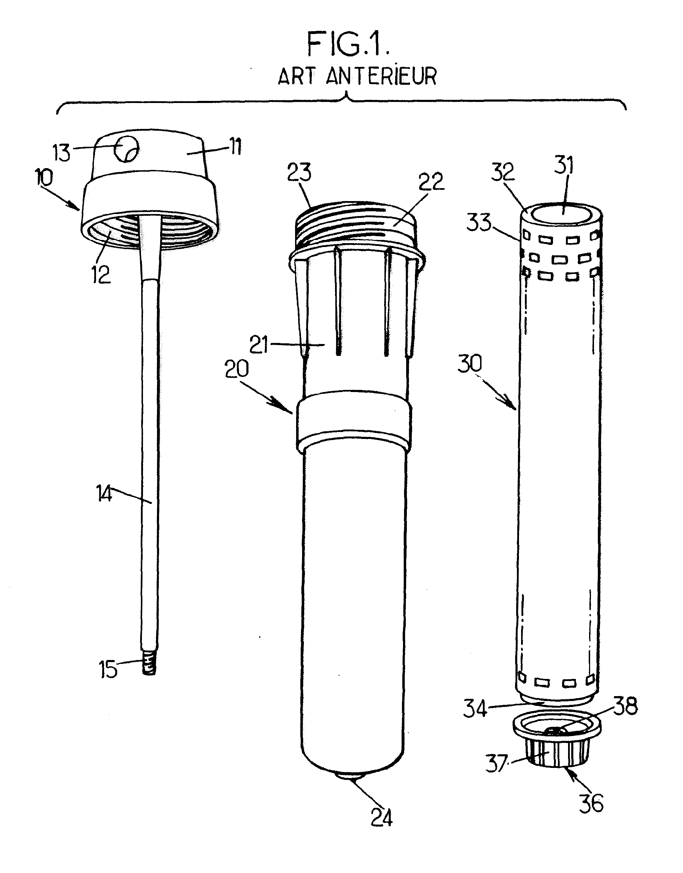

A titre d'exemple, un dispositif de filtration et une cartouche de filtration connus sont représentés en figure 1. Le dispositif de filtration représenté comprend une tête 10 et une cuve 20 qui peuvent être assemblées par vissage et où une cartouche de filtration 30 est susceptible d'être insérée.

La tête 10 est munie d'ouvertures, situées dans le haut 11 de la tête, ici ouverture 13 représentée, pour l'introduction et l'extraction d'un fluide. Cette tête comprend une partie de liaison 12, pour recevoir par vissage la cuve 20. Elle comprend également une tige 14 munie d'une extrémité filetée 15 pour recevoir une cartouche de filtration 30.

La cuve 20 est destinée à s'étendre longitudinalement, sensiblement dans l'axe de la tige support quand le dispositif est assemblé. La cuve comprend une partie 22 avec un raccord fileté destiné à être vissée avec la partie de liaison 12 de la tête 10. Le haut 23 de la cuve peut recevoir un joint (non représenté). La cuve comprend une partie 21 susceptible de recevoir une cartouche de filtration 30. La cuve 20 comprend également une ouverture 24 sur laquelle peut être par exemple vissé un dispositif de purge susceptible d'être ouvert par un actionneur.

La cartouche de filtration 30 est cylindrique et comprend un média filtrant 32 recouvert d'une gaine de protection 33 comprenant de nombreux orifices à travers lesquels peut passer un fluide. Cette cartouche 30 est creuse de manière à ce que le fluide qui a traversé le média filtrant puisse circuler par la cavité 31. Un joint 34 est disposé aux extrémités inférieures et supérieures de la cartouche 30.

La cartouche de filtration 30 est disposée en service de manière à ce que son axe coïncide avec celui de la tige support 14 et son extrémité inférieure est maintenue en position étanche par un bouchon 36.

Le bouchon 36 comprend un corps 37 qui peut être manipulé en rotation à la main ou avec un outil et dans lequel a été usiné un trou fileté 38. Pendant le montage l'extrémité filetée 15 de la tige support 14 est vissée au trou fileté 38 du bouchon 36.

De manière usuelle, un dispositif de filtration connu est mis en oeuvre avant de procéder à une opération de filtration de la manière suivante :
- fixation de la tête 10 comprenant la tige support 14 à une installation en vue du raccordement à des canalisations amont et aval,
- mise en place de la cartouche de filtration 30, notamment de forme cylindrique creuse, autour de la tige support 14 de la tête et vissage d'un bouchon 36 à une extrémité filetée 15 de ladite tige support de manière à ce que la cartouche de filtration 30 soit maintenue en contact étanche avec la tête 10 et avec le bouchon 36,
- vissage étanche de la cuve 20 avec la tête 10.

Le démontage usuel d'une telle installation s'effectue en effectuant les étapes précédentes de manière symétrique afin de dévisser la cuve puis la cartouche de filtration.

La mise en oeuvre d'un tel dispositif peut présenter certains inconvénients, notamment liés au fait que l'on enlève d'abord la cuve puis la cartouche de filtration pour procéder au démontage. Il résulte de cette succession d'étapes que du liquide contenu par la cartouche de filtration humide ou éventuellement colmatée peut goutter et se répandre hors du dispositif après que la cuve ait été retirée. Ceci est particulièrement dommageable quand le liquide susceptible de se répandre est dangereux pour l'environnement, par exemple chimiquement toxique et/ou radioactif.

Un but de la présente invention est d'obvier aux inconvénients précités et notamment de proposer un dispositif de filtration où l'on peut désolidariser une cartouche de filtration de la tête du dispositif sans l'ôter de la cuve dudit dispositif.

L'invention propose ainsi un dispositif de filtration de fluide comprenant :
- une tête munie d'ouvertures pour l'introduction et l'extraction de fluide, comprenant une partie de liaison pour recevoir par vissage une cuve et comprenant également une tige support munie d'une extrémité filetée pour recevoir une cartouche de filtration,
- un bouchon pour retenir ladite cartouche de filtration, où ledit bouchon comprend une partie filetée susceptible d'être vissée à l'extrémité filetée de la tige support,
- une cuve s'étendant longitudinalement sensiblement selon l'axe de la tige support quand le dispositif est assemblé et susceptible de contenir une cartouche de filtration disposée selon l'axe de la tige support et maintenue par le bouchon de ladite tige support, où ladite cuve comprend une partie de raccord fileté destinée à être vissée avec la partie de liaison de la tête,
- des moyens d'engagement en rotation du bouchon solidaires en rotation de la cuve.

Le fluide à filtrer peut être un liquide ou un gaz.

Grâce au dispositif ci-dessus, il est possible de désolidariser une cartouche de filtration de la tête du dispositif sans avoir à ôter ladite cartouche de la cuve et éviter ainsi de répandre du liquide de la cartouche de filtration dans un endroit non désiré.

Les moyens d'engagement en rotation du bouchon, solidaires en rotation de la cuve, peuvent être des moyens indépendants de la cuve et être configurés de manière à s'adapter à des cuves commercialisées. Ils peuvent également être intégrés à la cuve, soit par une adoption de cuves commercialisées, soit par réalisation de cuves spécifiques étudiées de manière à incorporer de tels moyens.

La solidarisation en rotation à la cuve peut se faire suivant de nombreuses variantes, telles que, par exemple, la solidarisation complète notamment par collage ou vissage, des moyens d'engagement en rotation du bouchon, ou bien par une solidarisation partielle desdits moyens d'engagement en rotation du bouchon susceptibles d'être bloqués en rotation par rapport à la cuve mais pouvant présenter d'autres degrés de liberté par rapport à cette dernière. Selon ces derniers modes de réalisation, il est possible de prévoir des moyens de solidarisation seulement en rotation entre ces moyens d'engagement en rotation du bouchon et la cuve. A titre d'exemple, tous moyens où ces moyens d'engagement et la cuve présentent des formes complémentaires susceptibles d'interdire la rotation d'une partie par rapport à l'autre sont de nature à permettre la solidarisation en rotation désirée.

Parmi les nombreuses configurations envisageables, on peut citer les cas non limitatifs suivants :
- les moyens de solidarisation en rotation sont collés à la cuve ;
- les moyens de solidarisation en rotation font partie intégrante de la cuve et sont par exemple moulés avec cette dernière ;
- les moyens de solidarisation en rotation sont bloqués avec la cuve par des mors d'ancrage ;
- le fond de la cuve comprend des ailettes et les moyens de solidarisation en rotation comprennent des rainures dans lesquelles peuvent s'insérer lesdites ailettes ;
- le fond de la cuve est de section carrée ainsi qu'une partie des moyens de solidarisation en rotation qui contacte les bords intérieurs du fond de ladite cuve ;
- le dispositif de filtration est dépourvu de vanne, pour contrôler le débit du fluide, située entre les ouvertures pour l'introduction et l'extraction du fluide.

De même, les moyens d'engagement en rotation du bouchon peuvent prendre des formes variées afin de permettre aux dits moyens de dévisser le bouchon de l'extrémité filetée de la tige support.

Cet engagement en rotation peut par exemple s'opérer par la mise en contact d'une partie des moyens d'engagement en rotation avec une partie du bouchon. Cet engagement en rotation peut aussi par exemple s'opérer par blocage du bouchon par une partie des moyens d'engagement en rotation, où ladite partie peut par exemple prendre la forme de pinces ou de mors. Dans ce dernier cas, des bouchons standards peuvent être utilisés.

Il est en général avantageux de prévoir une adaptation des bouchons standards ou la réalisation de bouchons spécifiques afin de permettre un engagement en rotation optimisé du bouchon par les moyens d'engagement en rotation.

Selon différents modes de réalisation du présent dispositif, qui peuvent être combinés, selon toutes les combinaisons possibles :
- la cuve comprend des protubérances internes s'étendant selon la direction longitudinale de la cuve, notamment des ailettes et les moyens d'engagement en rotation du bouchon comprennent des rainures externes susceptibles de coulisser par rapport aux dites protubérances internes ;
- les moyens d'engagement comprennent deux pièces où une pièce est une pièce de solidarisation en rotation avec la cuve et une autre pièce est une pièce d'engagement en rotation du bouchon et où la pièce d'engagement en rotation du bouchon est susceptible de se déplacer selon l'axe de la tige support et est entrainée en rotation par la pièce de solidarisation en rotation quand le dispositif est assemblé ;
- la pièce de solidarisation en rotation comprend une surface d'appui, la pièce d'engagement en rotation comprend une surface de contre-appui entre lesquelles est disposé un ressort ;
- la pièce de solidarisation en rotation et la pièce d'engagement en rotation comprennent chacune une lumière ou une fente dans lesquelles est disposé un élément d'accouplement permettant de solidariser en rotation lesdites pièces ;
- le bouchon comprend au moins une face d'appui quand le bouchon est assemblé à ladite tige support, et les moyens d'engagement en rotation comprennent au moins une face d'appui susceptible de contacter la (les) face(s) d'appui du bouchon pour entrainer ledit bouchon en rotation ;
- le bouchon comprend deux faces d'appui reliées entre elles par deux surfaces où chacune de ces surfaces relie la partie inférieure d'une face d'appui et la partie supérieure de l'autre face d'appui ;
- les moyens d'engagement en rotation comprennent une arête avec deux faces longitudinales formant chacune face d'appui ;
- le bouchon comprend au moins une face d'appui et les moyens d'engagement en rotation du bouchon comprennent une pièce de solidarisation avec la cuve et au moins un doigt dont une extrémité est articulée en rotation sur ladite pièce de solidarisation et l'autre extrémité est susceptible de venir contacter la face d'appui pour entrainer ledit bouchon en rotation ;
- le bouchon comprend au moins deux faces d'appui et une surface reliant deux faces d'appui voisines forme une came suivie par l'extrémité lors du déplacement d'au moins un doigt.

La présente invention vise également un procédé d'installation d'un dispositif de filtration comprenant une cartouche de filtration où l'on dispose les moyens d'engagement en rotation du bouchon au fond de la cuve, on dispose la cartouche de filtration sur la tige support, on visse le bouchon à l'extrémité de la tige support de façon à maintenir la cartouche de filtration et à réaliser son étanchéité par l'intermédiaire d'un joint, puis on visse la cuve avec la partie de liaison de la tête de façon à refermer ledit dispositif.

La présente invention vise également un procédé de démontage d'un dispositif de filtration comprenant une cartouche de filtration où l'on dévisse la cuve de la tête et où ce dévissage entraine le dévissage du bouchon d'avec l'extrémité filetée de la tige support grâce à l'actionnement des moyens d'engagement en rotation du bouchon, solidaires en rotation de la cuve.

Selon un mode de réalisation, l'étape de dévissage de la cuve et de la tête est précédée d'une étape de purge, par exemple à travers un trou de purge.

L'invention sera mieux comprise à la lecture de la description qui va suivre, donnée uniquement à titre d'exemple et faite en se référant aux dessins annexés dans lesquels :
- la figure 1 représente une vue schématique partielle d'un dispositif de filtration connu et a déjà été détaillée ci-dessus ;
- la figure 2 représente une vue schématique en coupe partielle d'un dispositif selon l'invention avant vissage entre la tête et la cuve ;
- la figure 3 représente une vue schématique en coupe d'un dispositif selon l'invention après vissage entre la tête et la cuve ;
- les figures 4a et b représentent des vues d'un bouchon d'un dispositif selon l'invention ;
- les figures 5a et b représentent des vues d'une partie de moyens d'engagement en rotation d'un dispositif selon l'invention ;
- les figures 6a et b représentent des vues d'une autre partie de moyens d'engagement en rotation d'un dispositif selon l'invention ;
- la figure 7 représente une vue partielle d'un autre dispositif selon l'invention

Pour des raisons de clarté, les différents éléments représentés sur les figures ne sont pas nécessairement à l'échelle. Sur ces figures, des références identiques correspondent à des éléments identiques.

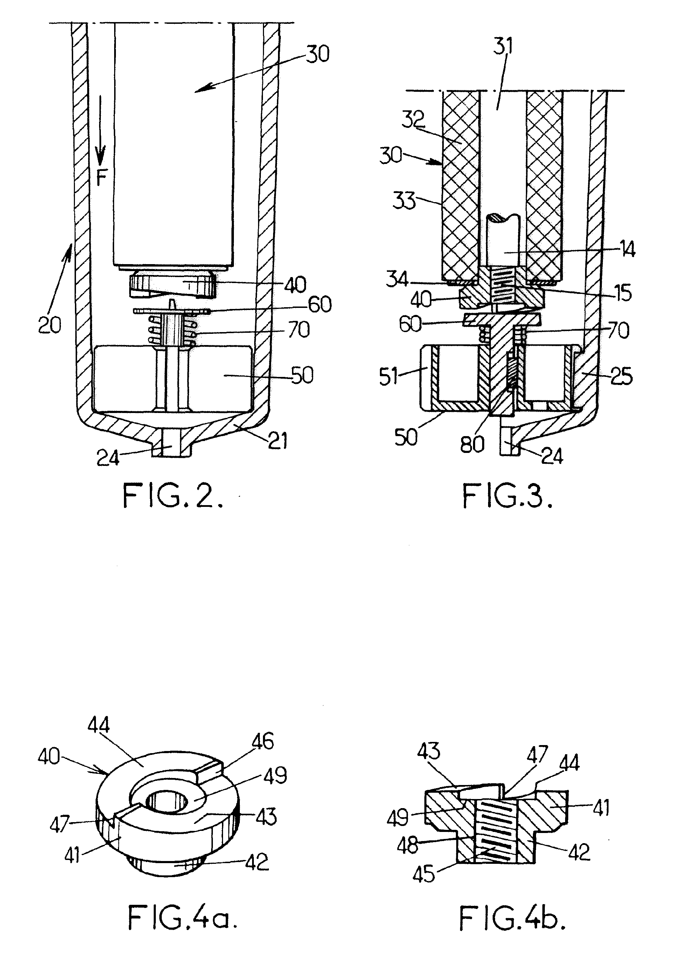

La figure 2 représente une vue schématique en coupe partielle d'un dispositif selon l'invention avant vissage entre la tête et la cuve. Dans le mode de réalisation ici représenté, les moyens d'engagement en rotation du bouchon 40 comprennent deux pièces principales : une pièce 60 d'engagement en rotation du bouchon 40 qui est susceptible de se déplacer selon l'axe de la tige support 14 (non représentée sur cette figure, car comprise dans cartouche de filtration 30) et une pièce 50 de solidarisation en rotation avec la partie 21 de la cuve 20.

Dans le dispositif représenté, on entend par « vers le bas » un sens correspondant à celui de la flèche F, par « vers le haut », un sens opposé ; le dispositif est ici représenté avec l'axe de la tige support 14 disposé sensiblement verticalement. Les positions relatives des pièces sont décrites en fonction de cette disposition.

La pièce 50 de solidarisation est dépourvue de degré de liberté de rotation par rapport à la cuve 20, quand elle est disposée au fond de la cuve 20. La pièce 60 d'engagement en rotation est disposée au-dessus de la pièce 50 de solidarisation et peut se déplacer uniquement de bas en haut par rapport à la pièce 60 d'engagement en rotation. Un ressort 70 est disposé entre la pièce 60 d'engagement en rotation et la pièce 50 de solidarisation.

La fermeture du dispositif s'effectue par vissage de la cuve 20 avec une tête (10 identique à celle de la figure 1). Au cours du vissage, la pièce d'engagement en rotation 60 entre en contact avec l'extrémité inférieure du bouchon 40 et le ressort 70 se comprime jusqu'à la fin du vissage entre la tête et la cuve.

Dans le dispositif représenté, le bouchon 40 est une pièce différente du bouchon standard représenté en figure 1, et a fait l'objet d'adaptation lui permettant de coopérer en rotation avec la pièce 60 d'engagement en rotation.

La figure 3 représente une vue schématique en coupe du dispositif selon l'invention où une cartouche de filtration 30 a été montée, où le vissage entre la tête et la cuve a été effectué et le joint 34 est comprimé entre le bouchon 40 et la partie inférieure de la cartouche de filtration 30.

Après serrage de la cuve et de la tête, le ressort 70 est comprimé et permet d'exercer une pression de la partie supérieure de la pièce 60 d'engagement en rotation contre la partie inférieure du bouchon 40. Dans le mode de réalisation représenté, la cuve 20 comprend des ailettes 25 disposées dans sa partie inférieure 21. Ces ailettes 25 sont utilisées pour assurer la solidarisation en rotation de la pièce 50 de solidarisation en rotation avec la cuve grâce à la présence de rainures 51 prévues dans ladite pièce 50 de manière complémentaire aux ailettes 25.

Une fois disposée au fond de la cuve, la pièce 50 de solidarisation en rotation ne peut se déplacer en rotation au regard de la cuve 20 et une action de rotation exercée sur la cuve 20 entraine cette pièce 50.

La pièce 60 d'engagement en rotation est maintenue en position angulaire constante par rapport à la pièce 50 de solidarisation en rotation grâce à un élément d'accouplement 80. La forme de l'élément d'accouplement 80 peut être variée et celui-ci est par exemple susceptible de s'engager dans des ouvertures des pièces 60 et 50 qui peuvent notamment être de forme allongée, carrée ou polygonale.

La partie supérieure de la pièce 60 d'engagement en rotation comprend des moyens permettant d'entrainer en rotation la partie inférieure du bouchon 40 dont les caractéristiques sont détaillées dans les figures suivantes.

Les figures 4a et b représentent respectivement une vue schématique en perspective et une vue en coupe d'un bouchon 40 du dispositif selon l'invention représenté en figures 2 et 3.

Pour des raisons de clarté, ce bouchon 40 est représenté dans une position opposée à sa disposition dans les figures 2 et 3. Selon la convention adoptée ci-dessus, le bouchon 40 comprend deux parties cylindriques coaxiales, disposées l'une au-dessus de l'autre, une partie inférieure 41 et une partie supérieure 42. La partie supérieure 42 est de diamètre inférieur à celui de la partie inférieure 41, ce qui permet de former une zone d'appui pour le joint 34. Cette partie supérieure 42 peut s'insérer à l'intérieur de la partie creuse 31 de la cartouche de filtration 30.

L'ensemble du bouchon 40 comprend un trou axial 48 muni d'un filetage 45 susceptible d'être vissé avec l'extrémité filetée 15 de la tige support 14. La partie inférieure 41 comprend deux faces d'appui 46, 47. Celles-ci sont chacune reliées entre elles par une surface 43, 44 qui relie la partie inférieure d'une face d'appui 46, 47 et la partie supérieure de l'autre face d'appui 47, 46. Ces surfaces peuvent constituer des surfaces de glissement pour une partie des moyens 60 d'engagement susceptibles de venir coopérer avec les faces d'appui 46, 47 afin d'actionner en rotation le bouchon 40. Une surface centrale plate 49 se situe au centre de la partie inférieure 41, entre les faces d'appui 46, 47 et les surfaces 43, 44.

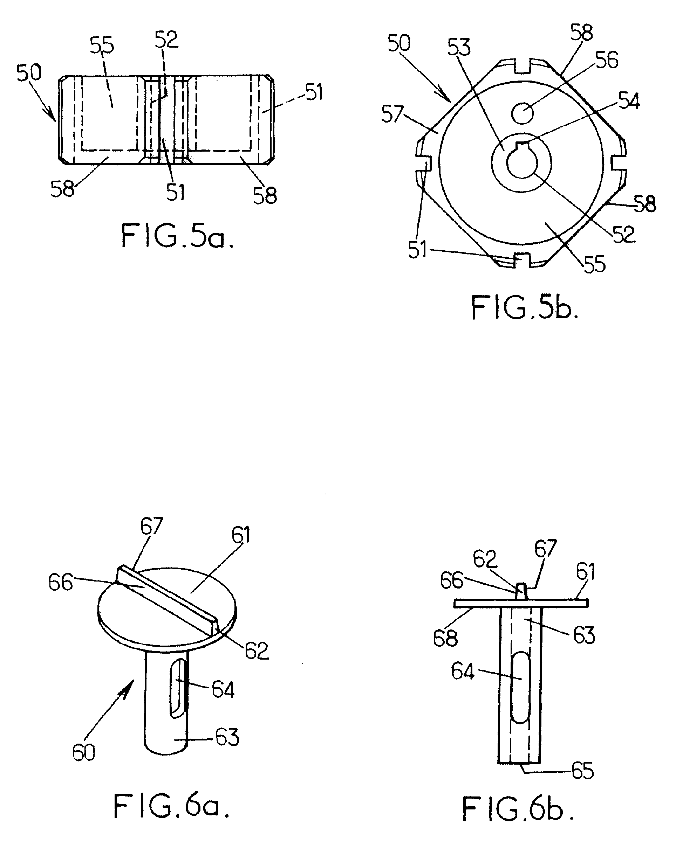

Les figures 5a et b représentent respectivement une vue de face et une vue de dessus de la pièce 50 de solidarisation en rotation avec la cuve 20 du dispositif représenté en figures 2 et 3. Selon ce mode de réalisation, la pièce 50 est de section sensiblement carrée et chacune de ses faces 58 se rejoignent dans une zone où sont disposées des rainures 51 s'étendant de bas en haut.

Cette pièce 50 comprend une ouverture cylindrique 52 entourée par une paroi cylindrique 53. Une lumière 54 est prévue susceptible de recevoir l'élément d'accouplement 80. Un espace creux 55 est situé entre la paroi cylindrique 53 et les parois 57 dont les faces extérieures correspondent aux faces 58.

L'espace creux 55 est limité par une zone pleine, plate, percée d'un orifice 56, et en continuité de matière avec les parois 53 et 57. Le ressort 70 peut être disposé sur le haut de la paroi 53 ou au fond de l'espace creux 55.

Les figures 6a et b représentent respectivement une vue schématique en perspective et une vue de face de la pièce 60 d'engagement en rotation du bouchon du dispositif selon l'invention représenté en figures 2 et 3. Cette pièce 60 comprend deux parties principales, une partie inférieure 63 et une partie supérieure 61.

La partie inférieure 63 est une partie cylindrique creuse comprenant un orifice cylindrique 65 et une lumière 64 dans laquelle peut s'engager l'élément d'accouplement 80. Cette partie inférieure 63 est susceptible de se déplacer de haut en bas dans l'ouverture cylindrique 52 de la partie 50 de solidarisation en rotation, sur une plage de débattement correspondant sensiblement à la compression / décompression du ressort 70. Cette partie inférieure 63 est rendue solidaire en rotation de la partie 50 de solidarisation grâce à la mise en place de l'élément d'accouplement 80 dans les lumières 64 et 54.

La partie supérieure 61 de la pièce 60 est de forme sensiblement cylindrique plate surmontée par une arête 62. La surface inférieure 68 de la partie supérieure 61 constitue une surface de contre-appui où une extrémité du ressort 70 est susceptible d'appuyer. L'arête 62 comprend deux faces d'appui 66, 67 susceptibles de contacter les faces d'appui 46, 47 du bouchon 40 afin d'engager ce dernier en rotation et de permettre de le dévisser de l'extrémité filetée 15 de la tige support 14 quand on exerce un mouvement de dévissage de la cuve 20.

Il convient de noter que la partie supérieure 61 de la pièce 60 pourrait également comprendre plus de deux faces d'appui, et par exemple comprendre une succession de dents susceptibles de s'engager avec une succession de faces d'appui d'un bouchon.

On peut ainsi dévisser le bouchon 40 et permettre à l'élément filtrant 30 de rester dans la cuve 20 après dévissage de la cuve 20 d'avec la tête 10.

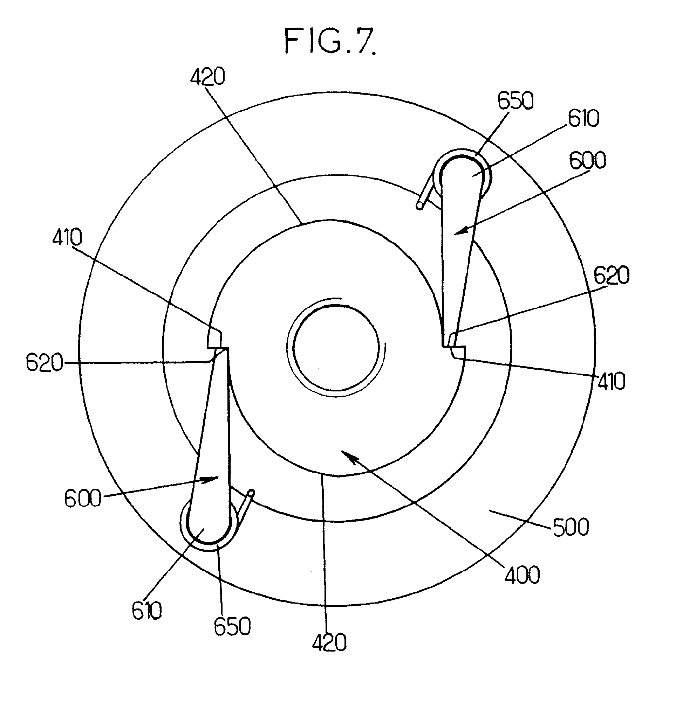

Un autre mode de réalisation d'un dispositif selon l'invention est illustré en figure 7 où un bouchon 400 comprend deux faces d'appui 410 et une surface 420 reliant les deux faces d'appui 410 pour former une came. Ce dispositif comprend une pièce 500 de solidarisation en rotation avec la cuve 20 (non représentée) et peut comprendre tout moyen adapté de solidarisation en rotation, comme par exemple ceux exposés plus haut. Cette pièce 500 est configurée pour recevoir deux doigts 600 dont une extrémité 610 est articulée en rotation avec la pièce 500 et l'autre extrémité 620 est susceptible de venir contacter une face d'appui 410 pour entrainer le bouchon 400 en rotation. Un ressort de rappel 650 permet d'exercer une force de rappel du doigt 600 vers le centre du bouchon 400.

Quand le bouchon 400 est vissé sur l'extrémité filetée 15 de la tige support 14 (non représentée) pour maintenir une cartouche de filtration 30, les doigts 600 peuvent reposer sur les surfaces 420.

Quand on dévisse la cuve 20 en entrainant la pièce 500 de solidarisation en rotation, les doigts 600 glissent sur les surfaces 420 jusqu'à venir contacter les faces d'appui 410 puis entrainer en rotation le bouchon 400 pour le dévisser de l'extrémité filetée 15 de la tige support 14, permettant ainsi un engagement radial du bouchon.

Grâce au dispositif selon l'invention, il est possible de procéder à un démontage dudit dispositif où le dévissage de la cuve 20 d'avec la tête 10 entraîne le dévissage du bouchon 40, 400 d'avec l'extrémité filetée 15 de la tige support 14 de par l'actionnement des moyens 50, 60 ; 500, 600 d'engagement en rotation du bouchon, solidaires en rotation de la cuve. On peut ainsi avantageusement permettre à la cartouche de filtration 30 de rester à l'intérieur de la cuve et non de rester suspendue à la tige support après le démontage comme avec les dispositifs connus.

On peut faire précéder l'étape de dévissage de la cuve d'avec la tête par une étape de purge à travers un trou de purge 24. On peut également faire suivre l'étape de dévissage de la cuve d'avec la tête par une étape d'égouttage de la cartouche de filtration 30 dans la cuve 20. Cette étape peut être particulièrement avantageuse quand le fluide à filtre comprend des produits toxiques et/ou radioactifs qui ainsi peuvent être retenus par la cuve 20.

Après avoir ôté le liquide du fond de la cuve, on peut récupérer le bouchon et disposer une nouvelle cartouche de filtration. Selon un mode de réalisation, on dispose des moyens de rappel entre la cartouche de filtration et le bouchon, comme par exemple un élastique de manière à pouvoir saisir simultanément la cartouche de filtration et le bouchon.

Il est à noter que de très nombreuses variantes peuvent être apportées aux configurations du dispositif selon l'invention et au procédé associé, telles par exemple que toutes variantes permettant à la pièce d'engagement en rotation 60 de glisser sur le bouchon 40 lorsque l'on visse la cuve et de se solidariser avec lui lorsqu'on dévisse la cuve.

L'invention ne se limite pas à ces types de réalisation et doit être interprétée de façon non limitative, et englobant tout mode de réalisation équivalent.

## Revendications

1. Dispositif de filtration de fluide comprenant :
- une tête (10) munie d'ouvertures (13) pour l'introduction et l'extraction de fluide, comprenant une partie de liaison (12) pour recevoir par vissage une cuve (20) et comprenant également une tige support (14) munie d'une extrémité filetée (15) pour recevoir une cartouche de filtration (30),
- un bouchon (40, 400) pour retenir ladite cartouche de filtration (30), où ledit bouchon (40, 400) comprend une partie filetée (45) susceptible d'être vissée à l'extrémité filetée (15) de la tige support (14),
- une cuve (20) s'étendant longitudinalement sensiblement selon l'axe de la tige support (14) quand le dispositif est assemblé et susceptible de contenir une cartouche de filtration (30) disposée selon l'axe de la tige support (14) et maintenue par le bouchon (40, 400) de ladite tige support, où ladite cuve (20) comprend une partie de raccord fileté (22) destinée à être vissée avec la partie de liaison (12) de la tête (10),
**caractérisé en ce que** le dispositif comprend en outre des moyens (50, 60 ; 500, 600) d'engagement en rotation du bouchon (40,400) solidaires en rotation de la cuve (20).

2. Dispositif de filtration selon la revendication précédente **caractérisé en ce que** la cuve (20) comprend des protubérances internes s'étendant selon la direction longitudinale de la cuve (20), notamment des ailettes (25) et les moyens (50, 500) d'engagement en rotation du bouchon comprennent des rainures externes (51) susceptibles de coulisser par rapport aux dites protubérances internes.

3. Dispositif de filtration selon l'une quelconque des revendications précédentes, **caractérisé en ce que** les moyens d'engagement comprennent deux pièces (50, 60) où une pièce est une pièce (50) de solidarisation en rotation avec la cuve (20) et une autre pièce est une pièce (60) d'engagement en rotation du bouchon (40) et où la pièce (60) d'engagement en rotation du bouchon est susceptible de se déplacer selon l'axe de la tige support (14) et est entrainée en rotation par la pièce (50) de solidarisation en rotation quand le dispositif est assemblé.

4. Dispositif de filtration selon la revendication précédente **caractérisé en ce que** la pièce (50) de solidarisation en rotation comprend une surface d'appui (55), la pièce (60) d'engagement en rotation comprend une surface de contre-appui (68) entre lesquelles est disposé un ressort (70).

5. Dispositif de filtration selon l'une quelconque des revendications 3 ou 4 **caractérisé en ce que** la pièce (50) de solidarisation en rotation et la pièce (60) d'engagement en rotation comprennent chacune une lumière ou une fente (respectivement 54 et 64) dans lesquelles est disposé un élément d'accouplement (80) permettant de solidariser en rotation lesdites pièces (50, 60).

6. Dispositif de filtration selon l'une quelconque des revendication précédentes **caractérisé en ce que** le bouchon (40) comprend au moins une face d'appui (46, 47) quand le bouchon est assemblé à ladite tige support, et **en ce que** les moyens (60) d'engagement en rotation comprennent au moins une face d'appui (66, 67) susceptible de contacter la (les) face(s) d'appui (46, 47) du bouchon (40) pour entrainer ledit bouchon en rotation.

7. Dispositif de filtration selon la revendication précédente **caractérisé en ce que** le bouchon (40) comprend deux faces d'appui (46, 47) reliées entre elles par deux surfaces (43, 44) où chacune de ces surfaces relie la partie inférieure d'une face d'appui (46, 47) et la partie supérieure de l'autre face d'appui (47, 46).

8. Dispositif de filtration selon l'une quelconque des revendications 6 ou 7 **caractérisé en ce que** les moyens (60) d'engagement en rotation comprennent une arête (62) avec deux faces longitudinales formant chacune face d'appui (66, 67).

9. Dispositif de filtration selon l'une quelconque des revendications 1 ou 2 **caractérisé en ce que** le bouchon (400) comprend au moins une face d'appui (410) et **en ce que** les moyens d'engagement en rotation du bouchon (400) comprennent une pièce (500) de solidarisation avec la cuve (20) et au moins un doigt (600) dont une extrémité (610) est articulée en rotation sur ladite pièce (500) de solidarisation et l'autre extrémité (620) est susceptible de venir contacter la face d'appui (410) pour entrainer ledit bouchon (400) en rotation.

10. Dispositif de filtration selon la revendication précédente **caractérisé en ce que** le bouchon (400) comprend au moins deux faces d'appui (410) et qu'une surface (420) reliant deux faces d'appui (410) voisines forme une came suivie par l'extrémité (620) lors du déplacement d'au moins un doigt (600).

11. Procédé d'installation d'un dispositif de filtration selon l'une quelconque des revendications 1 à 10 et comprenant une cartouche de filtration (30) **caractérisé en ce que** l'on dispose les moyens (50, 60 ; 500, 600), d'engagement en rotation du bouchon au fond de la cuve (20), on dispose la cartouche de filtration (30) sur la tige support (14), on visse le bouchon (40, 400) à l'extrémité de la tige support (14) de façon à maintenir la cartouche de filtration (30) et à réaliser son étanchéité par l'intermédiaire d'un joint (34), puis on visse la cuve (20) avec la partie de liaison (12) de la tête (10) de façon à refermer ledit dispositif.

12. Procédé de démontage d'un dispositif de filtration selon l'une quelconque des revendications 1 à 10 et comprenant une cartouche de filtration (30) où l'on dévisse la cuve (20) de la tête (10) et où ce dévissage entraine le dévissage du bouchon (40, 400) d'avec l'extrémité filetée (15) de la tige support (14) grâce à l'actionnement des moyens (50, 60 ; 500, 600) d'engagement en rotation du bouchon, solidaires en rotation de la cuve.

13. Procédé selon la revendication précédente **caractérisé en ce que** l'étape de dévissage de la cuve (20) et de la tête (10) est précédée d'une étape de purge, par exemple à travers un trou de purge (24).
